# DEMANDE DE BREVET EUROPEEN

(11) **EP 0 931 489 A1**
(43) Date de publication de la demande: **28.07.1999**
(21) Numéro de dépôt: 98420015.4
(22) Date de dépôt: 27.01.1998
(51) Int. Cl.: A47G 21/18, B29C 57/00

(54) **Elément tubulaire pour le prélèvement de liquide et procédé de fabrication de cet élément tubulaire**

(71) Demandeur: CARAPAK BRAINTRUST NV, Curaçao (AN)
(72) Inventeur: Susini, Etienne, 94400 Villecresnes (FR)
(74) Mandataire: Savoye, Jean-Paul

(57) **Abrégé**

Cet élément tubulaire pour le prélèvement de liquide dans un récipient par application d'une dépression à une de ses extrémités (1c), est destiné à passer à travers une ouverture ou un conduit d'entrée dudit récipient, la section de cet élément tubulaire (1) étant calibrée pour être jointive avec le bord de cette ouverture ou avec la paroi de ce conduit. Cet élément comprend des moyens (1d) faisant saillie d'une portion de sa face tubulaire externe et conformés pour permettre le passage de ladite portion à travers ladite ouverture ou ledit conduit de l'extérieur vers l'intérieur du récipient et pour s'opposer à son passage dans le sens opposé.

## Description

La présente invention se rapporte à un élément tubulaire pour le prélèvement de liquide dans un récipient par application d'une dépression à une de ses extrémités, destiné à passer à travers une ouverture ou un conduit d'entrée dudit récipient, la section de cet élément tubulaire étant calibrée pour être jointive avec le bord de cette ouverture ou avec la paroi de ce conduit.

Il existe de nombreux récipients présentant notamment la forme de sachets utilisés plus particulièrement pour le conditionnement de boissons, prévus pour permettre de consommer la boisson directement à partir du sachet en la pré-levant à l'aide d'une paille par aspiration. Ces sachets présentent généralement un problème d'hygiène qui résulte du fait que la paille peut être enlevée et remise dans le sachet, de sorte qu'il y a un risque que l'utilisateur réintroduise une paille souillée dans l'emballage. Ce risque est d'autant plus grand que l'utilisateur est très souvent un enfant et même un très petit enfant pour qui les notions d'hygiène peuvent être vagues.

De plus, l'extrémité de la paille destinée à être introduite dans le sachet est en général coupée en biseau ménageant ainsi une extrémité pointue, pour permettre de perforer un opercule destiné à la fermeture étanche du sachet avant sa première utilisation. En permettant le libre retrait de cette paille du sachet, on prend le risque que l'utilisateur se blesse avec l'extrémité biseautée relativement dure, capable de perforer. Or, de nouveau, ce risque est d'autant plus grand que le sachet est mis entre les mains d'un enfant jeune.

Par ailleurs, lorsqu'une telle paille est utilisée avec un sachet contrôlé par une valve formée par un canal ménagé entre deux lignes de soudage réunissant deux films superposés, l'extrémité biseautée coupante de la paille introduite dans ce canal présente le risque d'endommager cette valve suite aux mouvements répétés d'avance et de retrait de la paille destinés à permettre l'ouverture et respectivement la fermeture de cette valve.

Le but de la présente invention est de remédier, au moins en partie, aux inconvénients et aux risques susmentionnés.

A cet effet, cette invention a tout d'abord pour objet un élément tubulaire du type susmentionné, tel que défini par la revendication 1.

Cette invention a également pour objet un procédé de fabrication de cet élément tubulaire tel que défini par la revendication 5.

Selon une forme préférée de l'invention, le renflement annulaire est constitué par une portion d'extrémité de l'élément tubulaire en matériau thermoformable, retournée sur elle-même vers l'extérieur. L'extrémité à surface externe tronconique est formée ensuite sur l'extrémité de cette portion retournée.

L'extrémité de la portion de l'élément tubulaire retournée est ramenée en arrière le long de la paille et forme une portée annulaire à l'extérieur de l'élément tubulaire, servant de butée pour arrêter cet élément tubulaire lorsque l'on veut retirer son renflement annulaire d'une ouverture ou d'un conduit de section correspondant à la section normale de cet élément tubulaire après l'avoir engagé à travers cette ouverture ou ce conduit. Au contraire, la portion tronconique formée à l'avant de ce renflement annulaire permet d'exercer une force centrifuge sur les bords de l'ouverture ou la paroi du conduit formé en un matériau élastiquement extensible pour le dilater et permettre l'introduction de l'élément tubulaire dans le sachet et le resserrement de cette ouverture ou de ce conduit sur cet élément tubulaire, après le passage de son renflement.

Comme on peut s'en rendre compte, la forme d'exécution préférée de l'invention permet de fournir un moyen empêchant efficacement le retrait de l'élément tubulaire, tout en résolvant par la même occasion le problème relatif à l'extrémité coupante de la paille, puisque celle-ci est retournée et que la nouvelle extrémité n'est plus biseautée et n'est donc plus ni pointue, ni coupante, la formation du tronc de cône par moulage à chaud sur la partie retournée de l'élément tubulaire produisant un bord émoussé.

Le dessin annexé illustre, schématiquement et à titre d'exemple, une forme d'exécution de l'élément tubulaire objet de la présente invention et un mode de réalisation de son procédé de fabrication.
La figure 1 est une vue en élévation avec coupe partielle illustrant une première phase du procédé;
la figure 2 est une vue semblable à la figure 1 illustrant la seconde phase du procédé;
la figure 3 est une vue en élévation de l'élément tubulaire obtenu par ce procédé.

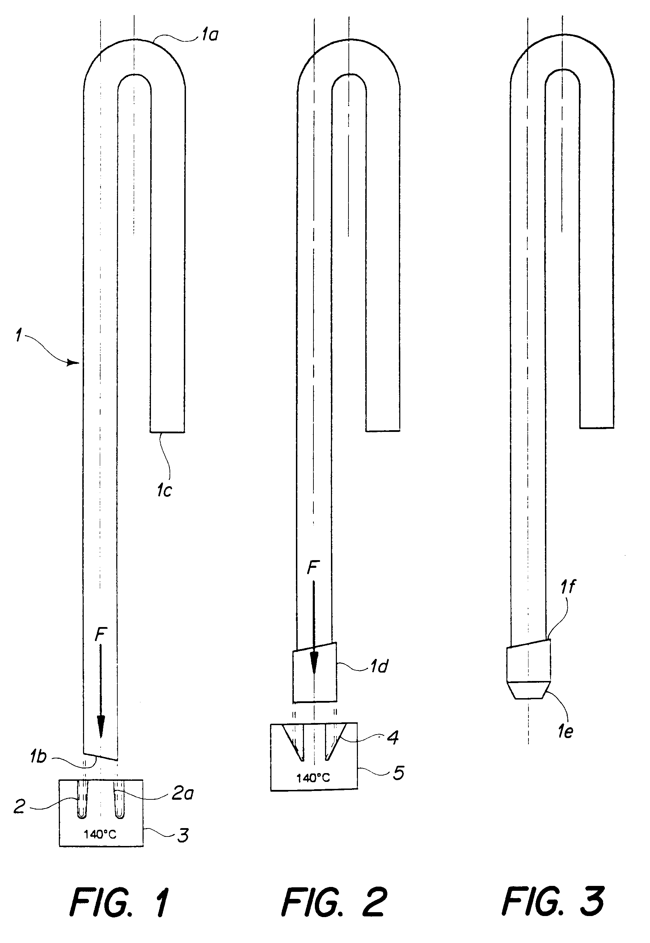

L'élément tubulaire illustré par la figure 1 est une paille 1 en polypropylène dans cet exemple, telle qu'on en trouve dans le commerce, présentant un segment la dans lequel est formé un soufflet par formation de plis en accordéon pour permettre de couder la paille à cet endroit. Une extrémité 1b de la paille 1 coupée en biseau, constitue son extrémité de succion destinée à être introduite dans un récipient de conditionnement d'une boisson. On peut toutefois préciser que ce biseau n'est pas nécessaire dans le cas de la présente invention. Toutefois comme ce type de paille est généralement disponible sous cette forme, on a voulu montrer que la présente invention ne nécessite pas de modification de ce type de paille. L'autre extrémité 1c de cette paille 1, par laquelle le liquide est aspiré, constitue l'extrémité de distribution du liquide contenu dans ce récipient.

Pour former le conduit tubulaire objet de la présente invention, l'extrémité biseautée 1b est introduite dans une empreinte annulaire 2 d'un premier moule 3 chauffé, dans le cas du polypropylène utilisé dans cet exemple, à la température de ramollissement de ce matériau qui se situe à environ 140°C. Cette empreinte présente un fond arrondi et une largeur légèrement supérieure au double de l'épaisseur de la paroi de la paille 1. La face annulaire interne 2a de cette empreinte 2 présente une très légère conicité, le plus petit diamètre se trouvant vers l'ouverture de l'empreinte 2 et correspond au diamètre interne de la paille 1.

En introduisant l'extrémité 1b de la paille 1 dans cette empreinte annulaire 2 et en exerçant une légère pression axiale sur la paille dans le sens de la flèche F, le polypropylène se ramollit et se retourne progressivement vers l'extérieur selon la forme de l'empreinte 2. Dès que la partie retournée de la paille 1 formant un renflement annulaire 1d a atteint la longueur désirée, on retire la paille 1 de l'empreinte 2.

On passe alors à la seconde étape du procédé qui consiste à introduire l'extrémité de la paille 1 présentant le renflement annulaire 1d dans une seconde empreinte 4 d'un second moule 5, chauffé à 140°C. La forme de cette seconde empreinte annulaire 4 est formée d'une surface cylindrique interne dont le diamètre correspond au diamètre interne de la paille 1 et d'une surface externe tronconique dont la petite base a, de préférence, un diamètre très légèrement supérieur au diamètre intérieur de la paille 1, d'une valeur correspondant approximativement à l'épaisseur de la paroi de la paille 1.

En introduisant l'extrémité du renflement annulaire 1d de la paille 1 dans cette seconde empreinte annulaire 4 et en exerçant une légère pression dans le sens de la flèche F, on forme une partie tronconique 1e à l'extrémité avant du renflement annulaire 1d (figure 3). La partie arrière du renflement annulaire 1d formée par l'extrémité retournée de la paille 1, ménage une portée arrière 1f entre le renflement annulaire 1d et la paille 1. Cette portée sert de butée destinée à empêcher de ressortir la paille 1 après l'avoir engagée à travers une ouverture ou un conduit calibré à la section de la paille 1 et ménagé dans un matériau élastiquement extensible. Par contre, la partie tronconique 1e ménagée à l'extrémité avant du renflement 1d permet de dilater la matière de l'ouverture ou du conduit calibré contrôlant l'entrée dans la récipient. Bien entendu, la matière dans laquelle cette ouverture ou ce passage est formé doit avoir une élasticité suffisante pour permettre cette dilatation élastique, pour se resserrer après le passage du renflement 1c et l'empêcher de ressortir. Ce matériau peut avantageusement être à base de polyéthylène.

A titre indicatif, on a introduit une paille selon la présente invention dans un sachet contenant 0,5 litre d'eau et on a fait pénétrer la paille 5 cm au-delà de l'ouverture ou du passage calibré. On a tenu la paille verticalement et on a alors lâché le sachet. Le renflement 1d a permis de retenir le sachet.

Bien entendu, d'autres formes d'exécutions peuvent être imaginées pour atteindre le même résultat, c'est-à-dire permettre l'introduction de la paille dans un sens à travers une ouverture ou un passage calibré au diamètre de la paille, mais l'empêcher de traverser cette même ouverture dans l'autre sens.

C'est ainsi que l'on pourrait imaginer d'utiliser des languettes élastiques réparties angulairement autour de la paille et ménagées par découpage de la paroi de la paille puis déformées par chauffage. De telles solutions ont été étudiées mais ne sont pas considérées comme les plus intéressantes, aussi bien en ce qui concerne leur efficacité que leur coût de fabrication.

Le procédé de fabrication décrit est effectivement simple et rapide à mettre en oeuvre. Par ailleurs, la forme d'exécution décrite permet, comme on l'a vu, non seulement de résoudre le problème de la retenue d'un sachet rempli de 0,5 litre d'eau, mais de supprimer les risques de blessure que présente la paille biseautée. Par conséquent, même si on sort la paille, par exemple une fois le récipient vide en tirant très fortement ou en coupant le sachet, il n'y a pas de risque de se blesser avec l'extrémité de la paille qui se trouvait à l'intérieur du sachet.

## Revendications

1. Elément tubulaire pour le prélèvement de liquide dans un récipient par application d'une dépression à une de ses extrémités (1c), destiné à passer à travers une ouverture ou un conduit d'entrée dudit récipient, la section de cet élément tubulaire (1) étant calibrée pour être jointive avec le bord de cette ouverture ou avec la paroi de ce conduit, caractérisé en ce qu'il comprend des moyens (1d) faisant saillie d'une portion de sa face tubulaire externe et conformés pour permettre le passage de ladite portion à travers ladite ouverture ou ledit conduit de l'extérieur vers l'intérieur du récipient et pour s'opposer à son passage dans le sens opposé.

2. Elément tubulaire selon la revendication 1, destiné à passer à travers une ouverture ou un conduit en matière élastiquement extensible, caractérisé en ce qu'il comporte un renflement annulaire (1d) comprenant une surface externe tronconique (1e) dont la conicité est dirigée vers l'extrémité de succion (1b) de l'élément tubulaire (1) et dont le petit diamètre, situé à l'avant dudit renflement annulaire (1d), correspond sensiblement au diamètre de l'élément tubulaire (1), ce renflement annulaire (1d) se terminant à son autre extrémité par une portée (1f) servant de butée d'arrêt.

3. Elément tubulaire selon l'une des revendications précédentes, caractérisé en ce qu'il est en un matériau thermoformable dans lequel ledit renflement annulaire (1d) est constitué par une portion de son extrémité de succion (1b) retournée sur elle-même.

4. Elément tubulaire selon l'une des revendications précédentes, caractérisé en ce qu'un segment cylindrique est ménagé entre la plus grande base de ladite partie tronconique (1e) et ladite portée (1f) servant de butée d'arrêt.

5. Procédé de fabrication d'un élément tubulaire réalisé en un matériau thermoformable, caractérisé en ce que l'on forme une empreinte annulaire (2) de moule (3) conformée pour retourner annulairement une extrémité de la paroi de l'élément tubulaire (1) vers l'extérieur, que l'on chauffe le moule (3) à la température de ramollissement dudit matériau thermoformable de cet élément tubulaire (1), que l'on presse axialement l'extrémité de cet élément tubulaire (1) adjacente à l'extrémité de succion (1b), jusqu'à l'obtention d'un renflement annulaire (1d) de longueur désirée, que l'on forme une seconde empreinte annulaire (4) dont le diamètre interne correspond sensiblement à celui dudit élément tubulaire (1) et dont la face externe est tronconique, que l'on chauffe cette seconde empreinte annulaire (4) puis que l'on presse axialement l'extrémité avant dudit renflement annulaire (1d) dans cette seconde empreinte annulaire (4).
